# FASCICULE DE BREVET EUROPEEN

(11) **EP 3 375 591 B1**
(45) Date de publication et mention de la délivrance du brevet: **23.10.2019**
(21) Numéro de dépôt: 18305274.5
(22) Date de dépôt: 14.03.2018
(51) Int. Cl.: B29C 49/12, B29C 49/78, B29C 49/06, B29C 49/36, B29C 49/48, B29L 31/00

(54) **PROCEDE DE REGLAGE AUTOMATIQUE DE LA COURSE D'UNE TIGE D'ETIRAGE D'UN DISPOSITIF DE FORMAGE DE CORPS CREUX**
AUTOMATISCHES REGULIERUNGSVERFAHREN DES HUBS EINER RECKSTANGE EINER VORRICHTUNG ZUM FORMEN VON HOHLKÖRPERN
METHOD FOR AUTOMATIC ADJUSTMENT OF THE TRAVEL OF A STRETCHING ROD OF A DEVICE FOR FORMING HOLLOW BODIES

(30) Priorité: 17.03.2017 FR 1752200
(43) Date de publication de la demande: 19.09.2018
(73) Titulaire: Sidel Participations, 76930 Octeville-sur-Mer (FR)
(72) Inventeur: SANTAIS, Franck, 76930 Octeville-sur-mer (FR)
(74) Mandataire: Grassin d'Alphonse, Emmanuel Jean Marie

(56) Documents cités:
- EP-A2- 2 460 638
- WO-A1-2016/005682
- US-B1- 6 576 171

## Description

L'invention concerne un procédé de commande d'une tige coulissante d'étirage appartenant à un dispositif de formage de corps creux en matériau thermoplastique par étirage-soufflage.

L'invention concerne plus particulièrement un procédé de réglage de la course d'une tige coulissante d'étirage appartenant à un dispositif de formage de corps creux en matériau thermoplastique par étirage-soufflage, la tige d'étirage étant commandée cycliquement en coulissement depuis une position de repos jusqu'à une position extrême d'étirage réglable afin d'étirer la paroi malléable d'un corps creux, avant de revenir à la position de repos pour entamer un cycle suivant d'étirage d'un autre corps creux, le procédé comportant une étape de contrôle qui consiste à détecter si un effort axial s'opposant au coulissement de la tige d'étirage en fin de course est supérieur à une borne supérieure déterminée. Des procédés et dispositifs de l'arrière plan technique de l'invention sont décrits dans les documents WO2016/005682A1, EP2460638A2 et US6576171B1.

### ARRIERE PLAN TECHNIQUE DE L'INVENTION

Il est connu de former des récipients en matériau thermoplastique par étirage-soufflage de préformes préalablement chauffées à une température suffisante pour en ramollir les parois.

A cet effet, on utilise un dispositif de formage qui comporte un moule présentant une cavité conformé à l'empreinte du récipient à obtenir. La préforme préalablement chauffée est reçue dans la cavité. Puis, ses parois sont soumises à un étirage dit "biaxial" pour venir épouser l'empreinte du moule. Pour ce faire, la préforme est étirée axialement au moyen d'une tige d'étirage pour provoquer l'expansion axiale de la préforme. Simultanément à cette opération d'étirage, un fluide sous pression est injecté dans la préforme de manière à provoquer l'expansion radiale de la paroi.

Un tel procédé de formage est bien connu. Pour que le récipient final présente un fond parfaitement moulé, il est préférable que la tige d'étirage amène le fond de la préforme en contact avec le fond de moule. Il est préférable que la paroi formant le fond de la préforme soit légèrement pincée entre l'extrémité libre de la tige d'étirage et le fond de moule.

Pour la production de récipients en grandes séries, il est connu d'utiliser une machine de soufflage, notamment une machine rotative de soufflage, qui est équipée d'une pluralité de dispositifs de formage de ce type.

Par ailleurs, un tel dispositif de formage est très onéreux. Pour permettre aux fabricants de récipients de rentabiliser ce matériel, un même dispositif de moulage est conçu pour permettre de réaliser des récipients de formats différents par remplacement de certains éléments dits "personnalisables", tels que les éléments de moulage.

Pour réduire le coût de fabrication d'une telle machine, certains composants sont utilisés indépendamment du format de récipient à produire. C'est notamment le cas de l'organe de motorisation de la tige d'étirage. Ainsi, il est prévu de pouvoir régler la course de la tige d'étirage en fonction de plusieurs paramètres parmi lesquels on citera à titre d'exemples non limitatifs le format du récipient à produire et l'épaisseur de la paroi de la préforme.

Jusqu'à présent, le réglage de la course de la tige d'étirage est réalisé par un opérateur qui, en préparation à la production d'une série de récipients d'un format déterminé, programme par exemple une unité de commande de la tige d'étirage pour la faire coulisser sur une course déterminée.

Cependant, il peut arriver que l'opérateur se trompe, ou encore que l'épaisseur de la paroi de fond des préformes et/ou les dimensions des moules ne soient pas conformes au cahier des charges.

Dans ce cas, il peut arriver que la tige d'étirage vienne butée contre le fond de moule et/ou qu'elle ne pince trop fort la paroi de préforme contre le fond de moule. Pour éviter que le moteur de commande du coulissement de la tige d'étirage soit endommagé, notamment pour cause de surchauffe, et pour éviter que les récipients obtenus présentent des anomalies, il est connu de surveiller l'effort axial exercé par la tige d'étirage sur la préforme, notamment à proximité de sa position extrême d'étirage.

Lorsque l'effort axial détecté est trop élevé, on considère que la course de la tige d'étirage est trop longue. On attend généralement qu'un effort axial anormalement élevé se reproduise plusieurs fois avant de signaler le problème, notamment pour éviter les anomalies passagères.

Lorsque le problème est signalé, l'opérateur stoppe l'arrivée des préformes dans la machine de soufflage, puis la machine de soufflage est arrêtée de manière à corriger manuellement la longueur de la course de la tige d'étirage.

Lors de cette opération, les préformes déjà présente sur la machine de soufflage sont jetées au rebut car elles n'ont pas pu être formées correctement. Cette opération entraîne donc du gaspillage de matière première.

En outre, une telle opération implique l'arrêt total de la chaîne de production pendant la durée nécessaire à la correction de la course. Cette opération entraîne donc une perte de temps.

### BREF RESUME DE L'INVENTION

L'invention propose un procédé du type décrit précédemment, caractérisé en ce que la position extrême d'étirage d'un cycle suivant d'étirage est réglée automatiquement par asservissement à l'effort axial détecté lors de l'étape de contrôle.

Un tel procédé permet notamment de corriger automatiquement la course de la tige d'étirage sans avoir à stopper la production de corps creux. En effet, ladite détection vise à savoir si l'effort axial au moment où la tige d'étirage atteint la position extrême d'étirage programmée pour l'étirage d'un corps creux est supérieur à une borne supérieure déterminée. La dite détection est alors utilisée pour automatiquement corriger si nécessaire la position extrême d'étirage programmée pour un cycle suivant d'étirage d'un autre corps creux. De plus, ce procédé permet aussi d'économiser de la matière première en adaptant la course de la tige d'étirage au bénéfice de préformes déjà présentes dans la machine de soufflage au moment de la correction de la course.

Selon d'autres caractéristiques de l'invention :
- en cas de détection d'un effort axial supérieur à la borne supérieure après au moins un cycle d'utilisation, la position extrême d'étirage est décalée d'une première distance déterminée en retrait de la position extrême d'étirage précédente au cours d'une étape de correction de la course de la tige d'étirage ;
- si, pendant au moins un cycle, l'effort axial s'opposant au coulissement de la tige d'étirage en fin de course est inférieur à une borne inférieure déterminés, une étape d'adaptation de la course de la tige d'étirage est déclenchée au cours de laquelle la position extrême d'étirage est décalée au-delà de la position extrême d'étirage précédente d'une deuxième distance déterminée ;
- la deuxième distance est inférieure à la première distance déterminée ;
- le procédé est réitéré jusqu'à ce que l'effort axial demeure inférieur à la borne supérieure déterminée durant au moins un cycle ;
- le procédé est réitéré jusqu'à ce que l'effort axial soit compris entre la borne inférieure et la borne supérieure déterminée durant la fin de course de la tige d'étirage ;
- la tige d'étirage est commandée en coulissement par un moteur électrique ;
- l'effort axial est estimé à partir de la valeur de l'intensité du courant consommé par le moteur électrique ; Par exemple, la détermination si l'effort axial s'opposant au coulissement de la tige d'étirage en fin de course est supérieur à une borne supérieure déterminée, peut alors consister à déterminer si l'intensité du courant consommé par le moteur d'entrainement de la tige d'étirage est supérieure à une borne supérieure d'intensité de courant correspondante. La détermination peut également utiliser une mesure continue ou intermittente de l'intensité du courant consommé par le moteur d'entrainement de la tige d'étirage, pour en déduire une valeur estimée de l'effort axial au moment où la tige d'étirage atteint la position extrême d'étirage programmée pour le cycle en cours.
- le dispositif de moulage comporte un fond de moule, un fond du corps creux étant destiné à être légèrement écrasé entre la tige d'étirage en position extrême d'étirage et le fond de moule, de manière que l'effort axial d'écrasement soit compris entre la borne inférieure et la borne supérieure ; Par exemple, la détermination si l'effort axial s'opposant au coulissement de la tige d'étirage en fin de course est compris entre la borne inférieure et la borne supérieure déterminées, peut alors consister à déterminer si l'intensité du courant consommé par le moteur d'entrainement de la tige d'étirage est compris entre une borne inférieure et une borne supérieure d'intensité de courant correspondantes.
- la position extrême d'étirage est réglable automatiquement, par exemple au moyen d'un moteur électrique.

Selon un autre aspect, l'invention porte également sur un dispositif de formage de corps creux en matériau thermoplastique par étirage-soufflage pour la mise en oeuvre du procédé précité, comprenant :
- une tige coulissante d'étirage
- des moyens de réglage de la course de la tige coulissante d'éti rage
- des moyens de commande conçus pour commander cycliquement en coulissement la tige d'étirage depuis une position de repos jusqu'à une position extrême d'étirage réglable afin d'étirer la paroi malléable d'un corps creux, avant de revenir à sa position de repos pour entamer un cycle suivant d'étirage d'un autre corps creux,
- des moyens de contrôle conçus pour détecter si un effort axial s'oppose au coulissement de la tige d'étirage en fin de course est supérieur à une borne supérieure déterminée ;
dans lequel les moyens de contrôle sont conçus pour estimer l'effort axial s'opposant au coulissement de la tige (24) d'étirage en fin de course, et
dans lequel lesdits moyens de réglage de la course comprennent des moyens d'asservissement automatique de la position extrême d'étirage à l'effort axial mesuré en fin de course d'étirage d'un corps creux précédent, ce par quoi les moyens de réglage règlent automatiquement la position extrême d'étirage.

Avantageusement, la tige d'étirage est commandée en coulissement par un moteur électrique.

Avantageusement, l'effort axial est estimé à partir de la valeur de l'intensité du courant consommé par le moteur électrique.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique de dessus qui représente une installation de fabrication de récipients comportant une machine de soufflage apte à mettre en oeuvre le procédé de commande réalisé selon les enseignements de l'invention ;
- la figure 2 est une vue en coupe axiale qui représente l'un des dispositifs de formage qui équipe la machine de soufflage de la figure 1, la tige d'étirage étant dans une position de butée contre le fond d'un corps creux, la position de repos de la tige d'étirage étant représentée en traits interrompus ;
- la figure 3 est une vue similaire à celle de la figure 2 qui représente le dispositif de formage dans lequel la tige d'étirage occupe une position extrême d'étirage ;
- la figure 4 est un schéma-bloc qui illustre le procédé de commande réalisé selon un premier mode de réalisation de l'invention ;
- la figure 5 est schéma-bloc qui illustre le procédé de commande réalisé selon un deuxième mode de réalisation de l'invention.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif une direction axiale indiquée par la flèche "A" des figures et orientée de bas en haut, ainsi que des directions radiales orthogonales à la direction axiale.

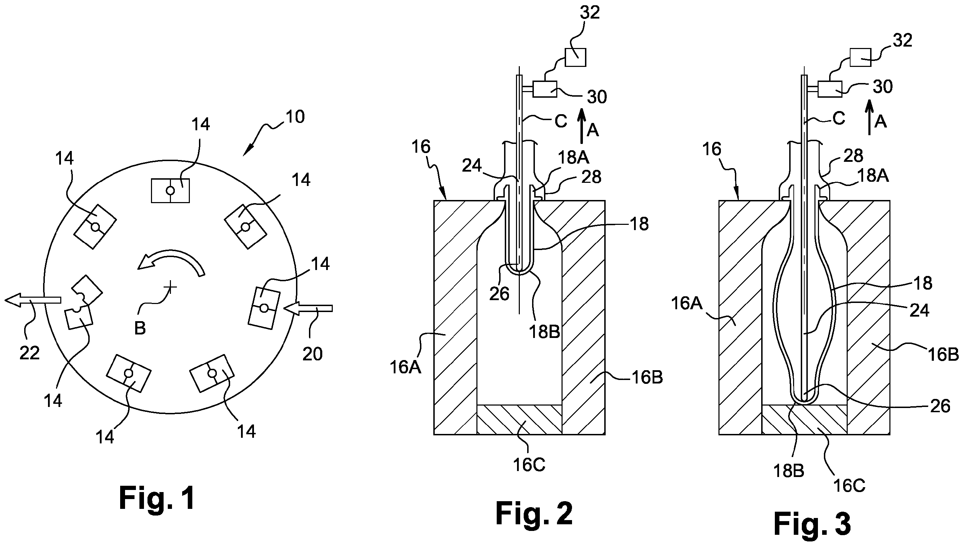

On a représenté à la figure 1 une machine 10 de formage de corps creux en grandes séries. Il s'agit par exemple d'une machine de soufflage rotative qui comporte un carrousel 12 tournant autour d'un axe "B" central d'orientation axiale. Le carrousel 12 porte une pluralité de dispositifs 14 de formage disposés régulièrement à sa périphérie. En fonctionnement normal de la machine 10, le carrousel 12 est entraîné en rotation continue, par exemple par un moteur (non représenté).

Dans la suite de la description, on utilisera le terme "corps creux" pour désigner indifféremment une préforme ou un récipient en cours de moulage.

Chaque dispositif 14 de formage est destiné à transformer un corps creux 18, notamment une préforme, en matériau thermoplastique, chauffée à une température suffisante pour rendre sa paroi malléable, en un récipient final (non représenté) par étirage-soufflage. Le formage du corps creux se produit pendant la rotation du carrousel 12 entre une zone 20 de chargement et une zone 22 de déchargement. A chaque tour de carrousel 12, un dispositif 14 de formage transforme un corps creux 18 en récipient final.

Chaque dispositif 14 de formage comporte un moule 16 qui est ici réalisé en trois parties, à savoir deux demi-moules 16A, 16B qui délimitent radialement une empreinte de récipient final et un fond 16C de moule qui délimite axialement vers le bas l'empreinte du récipient final.

Chaque dispositif 10 de formage est destiné à recevoir un corps creux 18 lorsqu'il est amené par rotation du carrousel 12 jusqu'à la zone 20 de chargement comme cela est illustré à la figure 1. Comme cela est représenté à la figure 2, le corps creux 18, ici une préforme, présente un axe principal "C" d'orientation axiale. Le corps creux 18 est ouvert axialement vers le haut par un col 18A qui débouche à l'extérieur du moule 16. Le corps creux 18 est fermé axialement vers le bas par un fond 18B inférieur. Le fond 16C de moule est agencé axialement au droit du fond 18B du corps creux 18.

Pour permettre le formage du corps creux, le dispositif 14 de formage comporte une tige 24 d'étirage qui s'étend axialement jusqu'à une extrémité 26 inférieure libre. La tige 24 d'étirage est montée coulissante axialement entre une position supérieure de repos qui est représentée en traits interrompus à la figure 2 et une position extrême inférieure d'étirage qui est représentée à la figure 3.

La tige 24 d'étirage a pour fonction d'étirer axialement la paroi latérale du corps creux 18 en appuyant contre le fond 18B du corps creux 18.

Chaque dispositif 14 de formage comporte en outre une tuyère 28 de soufflage qui est destinée à injecter un fluide sous pression dans le corps creux 18 pour permettre son expansion radiale.

L'utilisation combinée de la tige 24 d'étirage et de la tuyère 28 de soufflage permet ainsi de former le récipient final en plaquant la paroi du corps creux 18 contre l'empreinte du moule 16.

Lors du formage d'un corps creux, la tige 24 d'étirage est commandée selon un cycle qui consiste à faire coulisser la tige 24 d'étirage depuis sa position de repos jusqu'à une position de butée contre le fond 18B du corps creux 18, comme illustré à la figure 2, puis à poursuivre, de préférence sans interruption, le coulissement pour étirer la paroi jusqu'à sa position extrême d'étirage dans laquelle le fond 18B du corps creux 18 est légèrement écrasé entre l'extrémité 26 libre de la tige 24 d'étirage et le fond 16C de moule. Puis, le cycle d'étirage s'achève par un retour de la tige 24 d'étirage à sa position de repos pour entamer un cycle suivant d'étirage d'un autre corps creux.

La tige d'étirage est ainsi commandée cycliquement en coulissement.

La position extrême d'étirage de la tige 24 d'étirage est réglable pour permettre d'adapter la course en coulissement de la tige 24 d'étirage à différents modèles de moules 16 et/ou à différentes épaisseurs de fond 18B du corps creux 18. En revanche la position de repos de la tige 24 d'étirage demeure fixe.

La tige 24 d'étirage est ici commandée en coulissement par un moteur 30 électrique. Le moteur 30 électrique est piloté par une unité 32 électronique de commande.

La position extrême d'étirage est susceptible d'être réglée automatiquement, ici au moyen d'un moteur électrique.

La position extrême d'étirage est ici réalisée en programmant l'unité 32 électronique de commande du moteur 30 électrique. Ainsi, la position extrême d'étirage n'est pas déterminée par une butée mécanique, mais par arrêt du moteur 30 électrique lorsque la tige 24 d'étirage atteint sa position extrême d'étirage.

En variante non représentée, la position extrême d'étirage est réalisée par une butée mécanique qui est réglable axialement, par exemple au moyen d'un autre moteur électrique. En ce cas, la tige d'étirage peut être déplacée en coulissement par d'autres moyens, par exemple par des moyens pneumatiques ou hydrauliques.

Il peut arriver que la position extrême d'étirage ne soit pas réglée correctement et que l'extrémité 26 libre de la tige 24 d'étirage vienne en butée contre le fond 16C de moule, ou tout au moins exerce une pression trop importante sur le fond 18B du corps creux. Dans ce cas, le moteur 30 électrique commandant le coulissement risque d'être endommagé, par exemple par surchauffe. En outre, les récipients finaux risquent de ne pas être conformes aux attentes, par exemple à cause d'un fond trop fin, voire percé par la pression exercée par la tige d'étirage.

A cet effet, le procédé de commande de la tige 24 d'étirage comporte une étape de contrôle qui consiste à détecter si un effort axial s'opposant au coulissement de la tige 24 d'étirage est supérieur à une borne supérieure déterminée. Lorsque la tige 24 d'étirage est commandée en coulissement par un moteur 30 électrique, comme c'est ici le cas, ledit effort axial est estimé à partir de la valeur de l'intensité du courant consommé par le moteur 30 électrique, notamment en fin de course.

Pour éviter d'avoir à stopper la machine 10 de formage en cas de détection d'un défaut de réglage de la position extrême d'étirage, l'invention propose que le réglage de la position extrême d'étirage pour le cycle d'étirage suivant soit réalisé automatiquement par asservissement du moteur 30 électrique à l'effort axial détecté. Ainsi, une nouvelle position extrême d'étirage, dite "position extrême d'étirage adaptée", est programmée automatiquement par l'unité 32 électronique de commande pour remplacer la position extrême d'étirage initiale.

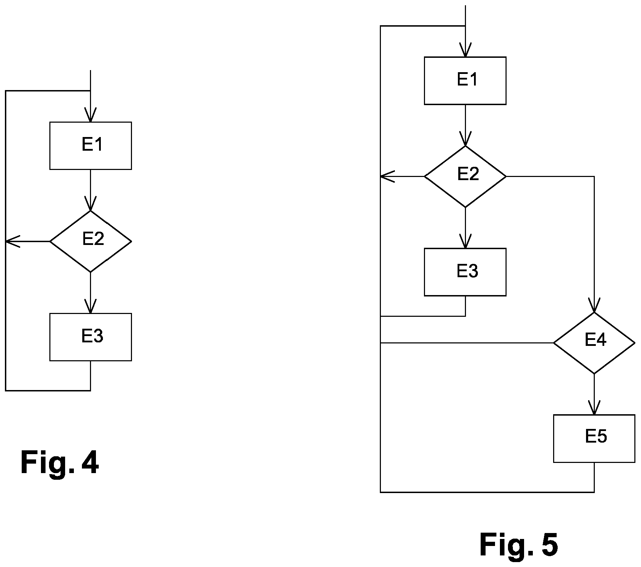

Selon un premier mode de réalisation de l'invention qui est représenté à la figure 4, le procédé de réglage de la course de la tige 24 coulissante comporte une première étape "E1" de détection de l'effort axial s'opposant au coulissement de la tige 24 d'étirage en fin de course, c'est-à-dire à proximité de sa position extrême d'éti rage.

Au cours d'une deuxième étape "E2" de vérification, on compare l'effort axial détecté lors de la première étape "E1" avec une borne supérieure.

Si l'effort axial détecté est inférieur à la borne supérieure, on considère que la position extrême d'étirage est correctement réglée. Le procédé de réglage est alors réitéré sans modification de la position extrême d'étirage initiale.

Si l'effort axial détecté est supérieur à la borne supérieure, on considère que la position extrême d'étirage n'est pas correctement réglée. La course de la tige 24 d'étirage est alors considérée comme étant trop longue.

Lorsque l'effort axial détecté excède la borne supérieure pendant au moins un cycle, une troisième étape "E3" de correction est déclenchée.

La troisième étape "E3" de correction est par exemple déclenchée lorsque l'effort axial détecté excède la borne supérieure pendant plusieurs cycles successifs, par exemple quatre ou cinq cycles. L'unité 32 électronique de commande comporte alors un compteur qui est réinitialisé à chaque fois que l'effort axial détecté repasse au-dessous de la borne supérieure.

En variante, le compteur n'est remis à zéro qu'après que l'effort axial détecté soit repassé au-dessous de la borne supérieure pendant un nombre déterminé de cycles successifs.

Selon une autre variante, la troisième étape de correction est déclenchée dès que l'effort axial détecté excède la borne supérieure pendant un seul cycle.

Lors de la troisième étape "E3" de correction de la course de la tige d'étirage, la position extrême d'étirage est décalée d'une première distance "d1" déterminée en retrait, vers le haut en se référant à la figure 3, par rapport à la position extrême d'étirage précédente de manière à réduire la course de coulissement de la tige 24 d'étirage.

Le procédé est réinitialisé et réitéré lors des cycles d'utilisation suivants de la tige 24 d'étirage, jusqu'à ce que l'effort axial soit inférieur à la borne supérieure déterminée.

Dans ce premier mode de réalisation, la première distance "d1" déterminée de retrait est constante. Elle permet de déplacer vers le haut par incrémentation la position extrême d'étirage jusqu'à ce que la course de la tige 24 d'étirage soit correctement réglée.

La première distance "d1" déterminée de retrait correspond par exemple à la tolérance de réglage habituellement acceptée lors du réglage de la position extrême d'étirage de la tige 24 d'étirage. Ainsi, on garantit que la tige 24 d'étirage permettra d'amener le fond 18B du corps creux 18 suffisamment proche du fond 16C de moule pour permettre un moulage correct de chaque récipient final. La première distance "d1" de retrait est par exemple inférieure ou égale à l'épaisseur du fond 18B du corps creux 18.

Un deuxième mode de réalisation de l'invention a été représenté à la figure 5.

Ce deuxième mode de réalisation propose d'approcher rapidement d'une position extrême d'étirage adaptée tout en diminuant la quantité de corps creux à jeter au rebut pendant le réglage.

Dans ce deuxième mode de réalisation si, pendant au moins un cycle suivant une troisième étape "E3" de correction, l'effort axial s'opposant au coulissement de la tige 24 d'étirage en fin de course est inférieur à une borne inférieure déterminée, une étape d'adaptation de la course de la tige 24 d'étirage est déclenchée au cours de laquelle la position extrême d'étirage est décalée au-delà de la position extrême d'étirage, c'est-à-dire vers le bas en se référant à la figure 3, d'une deuxième distance "d2" déterminée qui est inférieure à la première distance "d1" déterminée.

Ainsi, le procédé de réglage comporte les mêmes trois étapes "E1", "E2" et "E3" décrites dans le premier mode de réalisation de l'invention.

Cependant, à l'issue de la deuxième étape "E2" de vérification, si l'effort axial détecté est inférieur à la borne supérieure, au lieu de réitérer le procédé sans modification de la position extrême d'étirage initiale, une quatrième étape "E4" de vérification est déclenchée.

Lors de cette quatrième étape "E4, on compare l'effort axial détecté lors de la première étape "E1" avec une borne inférieure prédéterminée.

Si l'effort axial détecté est supérieur à la borne inférieure, on considère que la position extrême d'étirage est correctement réglée. Le procédé de réglage est alors réitéré sans modification de la position extrême d'étirage initiale.

Si l'effort axial détecté est inférieur à la borne inférieure, on considère que la position extrême d'étirage n'est pas correctement réglée. La course de la tige 24 d'étirage est alors considérée comme étant trop courte.

Lorsque l'effort axial détecté est inférieur à la borne inférieure pendant au moins un cycle, une cinquième étape "E5" d'adaptation est déclenchée.

La cinquième étape "E5" d'adaptation est par exemple déclenchée lorsque l'effort axial détecté est inférieur à la borne inférieure pendant un seul cycle.

Lors de la cinquième étape "E5" d'adaptation de la course de la tige 24 d'étirage, la position extrême d'étirage est décalée d'une deuxième distance "d2" déterminée, vers le bas en se référant à la figure 3, par rapport à la position extrême d'étirage précédente de manière à augmenter la course de coulissement de la tige 24 d'étirage.

Le procédé est réitéré jusqu'à ce que l'effort axial soit compris entre la borne inférieure et la borne supérieure déterminée durant la fin de course de la tige 24 d'étirage.

La deuxième distance "d2" est inférieure à la première distance "d1" et elle demeure fixe.

En variante, la première distance "d1" et la deuxième distance "d2" sont susceptibles de diminuer en fonction du nombre de réitération des étapes de correction et/ou d'adaptation. Ceci permet notamment d'éviter que la position extrême d'étirage de la tige 24 d'étirage ne soit constamment modifiée sans tendre vers une position stable.

Le procédé de réglage automatique de la position extrême d'étirage de la tige 24 d'étirage selon l'un quelconque des modes de réalisation précédemment décrits permet avantageusement d'adapter rapidement la course de la tige 24 d'étirage sans avoir à stopper la machine 10 de formage.

En outre, la course de la tige 24 d'étirage est susceptible de s'adapter automatiquement en réduisant la quantité de corps creux à jeter au rebut.

## Revendications

1. Procédé de réglage de la course d'une tige (24) coulissante d'étirage appartenant à un dispositif (14) de formage de corps creux (18) en matériau thermoplastique par étirage-soufflage, la tige (24) d'étirage étant commandée cycliquement en coulissement depuis une position de repos jusqu'à une position extrême d'étirage réglable afin d'étirer la paroi malléable d'un corps creux (18), avant de revenir à la position de repos pour entamer un cycle suivant d'étirage d'un autre corps creux (18), le procédé comportant une étape (E1) de contrôle qui consiste à détecter si un effort axial s'opposant au coulissement de la tige (24) d'étirage en fin de course est supérieur à une borne supérieure déterminée ;
**caractérisé en ce que** la position extrême d'étirage d'un cycle suivant d'étirage est réglée automatiquement par asservissement à l'effort axial détecté lors de l'étape (E1) de contrôle.

2. Procédé selon la revendication précédente, **caractérisé en ce qu'**en cas de détection d'un effort axial supérieur à la borne supérieure après au moins un cycle d'utilisation, la position extrême d'étirage est décalée d'une première distance (d1) déterminée en retrait de la position extrême d'étirage précédente au cours d'une étape (E3) de correction de la course de la tige (24) d'éti rage.

3. Procédé selon la revendication précédente, **caractérisé en ce que** si, pendant au moins un cycle, l'effort axial s'opposant au coulissement de la tige (24) d'étirage en fin de course est inférieur à une borne inférieure déterminés, une étape (E5) d'adaptation de la course de la tige (24) d'étirage est déclenchée au cours de laquelle la position extrême d'étirage est décalée au-delà de la position extrême d'étirage précédente d'une deuxième distance (d2) déterminée.

4. Procédé selon la revendication précédente, **caractérisé en ce que** la deuxième distance (d2) est inférieure à la première distance (d1) déterminée.

5. Procédé selon l'une quelconque des revendications précédentes, **caractérisé en ce que** le procédé est réitéré jusqu'à ce que l'effort axial demeure inférieur à la borne supérieure déterminée durant au moins un cycle.

6. Procédé selon la revendication précédente prise en combinaison avec l'une quelconque des revendications 3 ou 4, **caractérisé en ce que** le procédé est réitéré jusqu'à ce que l'effort axial soit compris entre une borne inférieure et la borne supérieure déterminée durant la fin de course de la tige (24) d'étirage.

7. Procédé selon la revendication précédente, **caractérisé en ce que** le dispositif (14) de moulage comporte un fond (16C) de moule, un fond (18B) du corps creux (18) étant destiné à être légèrement écrasé entre la tige (24) d'étirage en position extrême d'étirage et le fond (16C) de moule, de manière que l'effort axial d'écrasement soit compris entre la borne inférieure et la borne supérieure.

8. Dispositif (14) de formage de corps creux (18) en matériau thermoplastique par étirage-soufflage pour la mise en oeuvre du procédé selon l'une quelconque des revendications précédentes, comprenant :
- une tige (24) coulissante d'étirage
- des moyens de réglage de la course de la tige (24) coulissante d'étirage
- des moyens de commande conçus pour commander cycliquement en coulissement la tige (24) d'étirage depuis une position de repos jusqu'à une position extrême d'étirage réglable afin d'étirer la paroi malléable d'un corps creux (18), avant de revenir à sa position de repos pour entamer un cycle suivant d'étirage d'un autre corps creux (18),
- des moyens de contrôle conçus pour détecter si un effort axial s'oppose au coulissement de la tige (24) d'étirage en fin de course est supérieur à une borne supérieure déterminée ;
**caractérisé en ce que** les moyens de contrôle sont conçus pour estimer l'effort axial s'opposant au coulissement de la tige (24) d'étirage en fin de course, et **en ce que** lesdits moyens de réglage de la course comprennent des moyens d'asservissement automatique de la position extrême d'étirage à l'effort axial mesuré en fin de course d'étirage d'un corps creux précédent, ce par quoi les moyens de réglage règlent automatiquement la position extrême d'éti rage.

9. Dispositif selon la revendication 8, **caractérisé en ce que** la tige (24) d'étirage est commandée en coulissement par un moteur (30) électrique.

10. Dispositif selon la revendication précédente, **caractérisé en ce que** l'effort axial est estimé à partir de la valeur de l'intensité du courant consommé par le moteur (30) électrique.

11. Dispositif selon l'une quelconque des revendications 8 à 10, **caractérisé en ce que** le dispositif (14) de moulage comporte un fond (16C) de moule, un fond (18B) du corps creux (18) étant destiné à être légèrement écrasé entre la tige (24) d'étirage en position extrême d'étirage et le fond (16C) de moule, de manière que l'effort axial d'écrasement soit compris entre une borne inférieure et une borne supérieure.

## Patentansprüche

1. Verfahren zur Einstellung des Hubs einer gleitenden Reckstange (24), die zu einer Vorrichtung (14) zum Umformen von Hohlkörpern (18) aus thermoplastischem Material durch Streckblasen gehört, wobei das Gleiten der Reckstange (24) zyklisch von einer Ruhestellung bis in eine einstellbare äußerste Streckposition gesteuert wird, um die verformbare Wand eines Hohlkörpers (18) zu strecken, ehe sie in die Ruhestellung zurückkommt, um einen folgenden Streckzyklus eines anderen Hohlkörpers (18) zu beginnen, wobei das Verfahren einen Kontrollschritt (E1) aufweist, der darin besteht, zu erfassen, ob eine axiale Kraft, die dem Gleiten der Reckstange (24) in Endlage entgegenwirkt, größer ist als eine bestimmte Obergrenze;
**dadurch gekennzeichnet, dass** die äußerste Streckposition eines folgenden Streckzyklus automatisch durch Regelung auf die während des Kontrollschritts (E1) erfasste axiale Kraft eingestellt wird.

2. Verfahren nach dem vorhergehenden Anspruch, **dadurch gekennzeichnet, dass** im Fall der Erfassung einer über der Obergrenze liegenden axialen Kraft nach mindestens einem Verwendungszyklus die äußerste Streckposition während eines Korrekturschritts (E3) des Hubs der Reckstange (24) um einen ersten bestimmten Abstand (d1) zur vorhergehenden äußersten Streckposition zurückversetzt verlagert wird.

3. Verfahren nach dem vorhergehenden Anspruch, **dadurch gekennzeichnet, dass**, wenn während mindestens eines Zyklus die dem Gleiten der Reckstange (24) in Endlage entgegenwirkende axiale Kraft unter einer bestimmten Untergrenze liegt, ein Schritt (E5) der Anpassung des Hubs der Reckstange (24) ausgelöst wird, während dessen die äußerste Streckposition um einen zweiten bestimmten Abstand (d2) über die vorhergehende äußerste Streckposition hinaus verlagert wird.

4. Verfahren nach dem vorhergehenden Anspruch, **dadurch gekennzeichnet, dass** der zweite Abstand (d2) kleiner als der erste bestimmte Abstand (d1) ist.

5. Verfahren nach einem der vorhergehenden Ansprüche, **dadurch gekennzeichnet, dass** das Verfahren wiederholt wird, bis die axiale Kraft während mindestens eines Zyklus unter der bestimmten Obergrenze bleibt.

6. Verfahren nach dem vorhergehenden Anspruch in Kombination mit einem der Ansprüche 3 oder 4, **dadurch gekennzeichnet, dass** das Verfahren wiederholt wird, bis die axiale Kraft während der Endlage der Reckstange (24) zwischen einer Untergrenze und der bestimmten Obergrenze bleibt.

7. Verfahren nach dem vorhergehenden Anspruch, **dadurch gekennzeichnet, dass** die Formgebungsvorrichtung (14) einen Formwerkzeugboden (16C) aufweist, wobei ein Boden (18B) des Hohlkörpers (18) dazu bestimmt ist, zwischen der Reckstange (24) in äußerster Streckposition und dem Formwerkzeugboden (16C) derart leicht zusammengedrückt zu werden, dass die axiale Zusammendrückkraft zwischen der Untergrenze und der Obergrenze liegt.

8. Umformungsvorrichtung (14) von Hohlkörpern (18) aus thermoplastischem Material durch Streckblasen zur Durchführung des Verfahrens nach einem der vorhergehenden Ansprüche, die enthält:
- eine gleitende Reckstange (24),
- Einstelleinrichtungen des Hubs der gleitenden Reckstange (24),
- Steuereinrichtungen, die konzipiert sind, das Gleiten der Reckstange (24) von einer Ruhestellung bis zu einer einstellbaren äußersten Streckposition zyklisch zu steuern, um die verformbare Wand eines Hohlkörpers (18) zu strecken, ehe sie in ihre Ruhestellung zurückkommt, um einen folgenden Streckzyklus eines anderen Hohlkörpers (18) zu beginnen,
- Kontrolleinrichtungen, die konzipiert sind, zu erfassen, ob eine axiale Kraft, die dem Gleiten der Reckstange (24) in Endlage entgegenwirkt, über einer bestimmten Obergrenze liegt;
**dadurch gekennzeichnet, dass** die Kontrolleinrichtungen konzipiert sind, die dem Gleiten der Reckstange (24) in Endlage entgegenwirkende axiale Kraft zu schätzen, und dass die Einstelleinrichtungen des Hubs Einrichtungen zur automatischen Regelung der äußersten Streckposition auf die in der Streck-Endlage eines vorhergehenden Hohlkörpers gemessene axiale Kraft enthalten, wodurch die Einstelleinrichtungen automatisch die äußerste Streckposition einstellen.

9. Vorrichtung nach Anspruch 8, **dadurch gekennzeichnet, dass** das Gleiten der Reckstange (24) von einem Elektromotor (30) gesteuert wird.

10. Vorrichtung nach dem vorhergehenden Anspruch, **dadurch gekennzeichnet, dass** die axiale Kraft ausgehend vom Wert der Stärke des vom Elektromotor (30) verbrauchten Stroms geschätzt wird.

11. Vorrichtung nach einem der Ansprüche 8 bis 10, **dadurch gekennzeichnet, dass** die Formgebungsvorrichtung (14) einen Formwerkzeugboden (16C) aufweist, wobei ein Boden (18B) des Hohlkörpers (18) dazu bestimmt ist, zwischen der Reckstange (24) in äußerster Streckposition und dem Formwerkzeugboden (16C) derart leicht zusammengedrückt zu werden, dass die axiale Zusammendrückkraft zwischen einer Untergrenze und einer Obergrenze liegt.

## Claims

1. Method for adjusting the travel of a sliding stretching rod (24) belonging to a device (14) for forming hollow bodies (18) made of thermoplastic material by stretch-blow-moulding, the stretching rod (24) being made to follow a cycle of sliding from a starting position to an adjustable stretching end position in order to stretch the malleable wall of a hollow body (18) before returning to the starting position to begin a subsequent cycle of stretching another hollow body (18), the method comprising a monitoring step (E1) consisting in detecting whether an axial force opposing the sliding of the stretching rod (24) at the end of travel is greater than a given upper limit;
**characterized in that** the stretching end position of a subsequent stretching cycle is adjusted automatically by slaving to the axial force detected during the monitoring step (E1).

2. Method according to the preceding claim, **characterized in that**, in the event of detection of an axial force greater than the upper limit after at least one use cycle, the stretching end position is offset by a given first distance (d1) back from the preceding stretching end position during a step (E3) of correcting the travel of the stretching rod (24).

3. Method according to the preceding claim, **characterized in that** if, during at least one cycle, the axial force opposing the sliding of the stretching rod (24) at the end of the travel is below a given lower limit, this triggers a step (E5) of adapting the travel of the stretching rod (24), during which step the stretching end position is offset, by a given second distance (d2), beyond the preceding stretching end position.

4. Method according to the preceding claim, **characterized in that** the second distance (d2) is lower than the predetermined first distance (d1).

5. Method according to any of one the preceding claims, **characterized in that** the method is repeated until the axial force remains below the given upper limit during at least one cycle.

6. Method according to the preceding claim in combination with either one of Claims 3 and 4, **characterized in that** the method is repeated until the axial force is between a lower limit and the given upper limit during the end of the travel of the stretching rod (24).

7. Method according to the preceding claim, **characterized in that** the moulding device (14) comprises a mould bottom (16C), a bottom (18B) of the hollow body (18) being intended to be slightly crushed between the stretching rod (24) at its stretching end position and the mould bottom (16C) such that the axial crushing force is between the lower limit and the upper limit.

8. Device(14) for forming hollow bodies (18) made of thermoplastic material by stretch-blow-moulding for the implementation of the method according to any one of the preceding claims, comprising:
- a sliding stretching rod (24),
- means for adjusting the travel of the sliding stretching rod (24),
- control means intended to make the stretching rod (24) follow a cycle of sliding from a starting position to an adjustable stretching end position in order to stretch the malleable wall of a hollow body (18) before returning to its starting position to begin a subsequent cycle of stretching another hollow body (18),
- monitoring means designed to detect if an axial force that opposes the sliding of the stretching rod (24) at the end of the travel is greater than a given upper limit;
**characterized in that** the monitoring means are designed to estimate the axial force opposing the sliding of the stretching rod (24) at the end of the travel, and **in that** said travel adjustment means comprise means for automatically slaving the stretching end position to the axial force measured at the end of the travel of stretching of a preceding hollow body, by means of which the adjustment means automatically adjust the stretching end position.

9. Device according to Claim 8, **characterized in that** the stretching rod (24) is made to slide by an electric motor (30).

10. Device according to the preceding claim, **characterized in that** the axial force is estimated on the basis of the value of the intensity of current drawn by the electric motor (30).

11. Device according to any one of Claims 8 to 10, **characterized in that** the moulding device (14) comprises a mould bottom (16C), a bottom (18B) of the hollow body (18) being intended to be slightly crushed between the stretching rod (24) at its stretching end position and the mould bottom (16C) such that the axial crushing force is between a lower limit and an upper limit.
